# EUROPEAN PATENT SPECIFICATION

(11) **EP 1 278 807 B1**
(45) Date of publication and mention of the grant of the patent: **26.05.2010**
(21) Application number: 00961586.5
(22) Date of filing: 06.09.2000
(51) Int. Cl.: C09J 7/02, C09J 201/00

(54) **Adhesive composite**
Klebstoffkomposit
Composite adhésif

(30) Priority: 26.04.2000 US 558663
(43) Date of publication of application: 29.01.2003
(73) Proprietor: 3M Innovative Properties Company, St. Paul MN 55133-3427 (US)
(72) Inventor: LONCAR, Francis, V., Jr., Saint Paul, MN 55133-3427 (US)
(74) Representative: Vossius & Partner
(86) International application number: PCT/US2000/024444
(87) International publication number: WO 2001/081491

(56) References cited:
- US-A- 3 380 938

## Description

This invention relates to an adhesive composite.

Applying water-based coatings or adhesives on low energy surfaces has always been a difficult challenge. The crux of the problem is that water is a high energy liquid and does not readily wet-out a low energy surface. This results in water-based coatings beading up into droplets on the low energy surface, similarly to how water "beads up" on the hood of a new car.

A number of methods are known in the art to alleviate this situation. One method is to raise the surface energy of the substrate by using chemical prime layers, or using energetic methods such as Corona Treatment or Flame Treating. A second method is to lower the dyne level of the water-based coating, by adding natural soaps or synthetic surfactants. Many types arc known in the art. A third method is to raise the viscosity of the solution so that the liquid has sufficient modulus to maintain a continuous film by physically resisting the forces that would cause it to break into droplets. This third method is typically useful only when used in conjunction with one of the first two methods. A related method is to coat a thicker layer of adhesive, which can have a similar effect as raising the viscosity. However, this is generally an unacceptable method from both a cost and performance point of view. Adding common organic solvents such as methyl ethyl ketone ("MEK") or toluene is also an option to improving coatability, but this method has some deleterious effects on the water-based adhesive, some of which include making the solution flammable, negatively impacting the "eco-friendly" aspect of the water-based adhesive, and destabilizing the latex particles, thus causing coagulation.

The present invention provides an adhesive composite comprising
a) a sheet material having a low surface energy which is a microstructured liner, the sheet material having a low surface energy having a first major surface and a second major surface, the first major surface being microstructured,
b) a latex adhesive coated on the first major surface of the sheet material having a low surface energy from a coatable adhesive composition, the coatable adhesive composition comprising:
   (i) a latex adhesive, and
   (ii) 0.5 to 20 % by weight of a C2-C11 linear or branched, optionally unsaturated, alkyl mono-alcohol, said alcohol optionally being interrupted with one or more oxygens and being a liquid at 25°C, and
c) a backing layer having a first major surface and a second major surface, the second major surface being in contact with said coated latex adhesive.

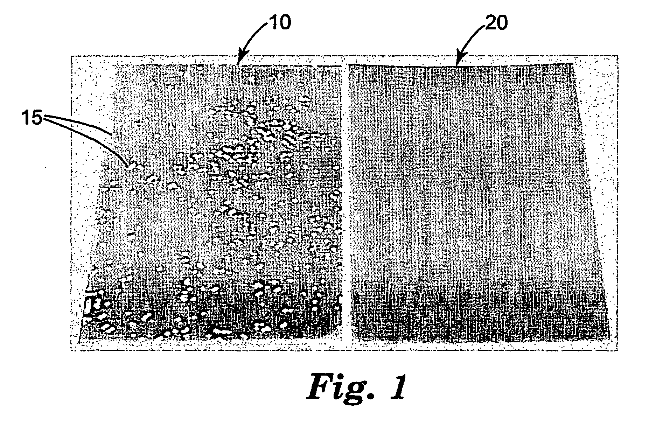

Fig. 1 is a side-by-side photograph of adhesives coated on a non-flat liner.

The invention in this document pertains to the use of linear or branched alcohols as a coating additive to water-based adhesives to get a defect-free web when coated on low energy surfaces such as silicone-coated release liner. Small amounts of a linear alcohol such as n-otanol can have a dramatic effect on the coating performance of a water-based adhesive. This is particularly true, when microstructured liners, such as Comply^{™} liner, are used. Surprisingly, the use of the coatirig-enhancing alcohol additive has little or no adverse effect on adhesion performance as compared to the same adhesive formulations that do not contain the coating-enhancing alcohol additive. Preferably, the 180° peel value of the inventive adhesive is no less than 80% of the same adhesive formulations that do not contain the coating-enhancing alcohol additive. The present invention additionally can enable an adhesive that can be satisfactorily coated at low speeds with few or no defects to be modified so that it can be coated at high speeds, with few or no defects while not sacrificing adhesion performance.

Coating a low energy surface, such as a release liner, with a latex adhesive is difficult. If modifications to the adhesive or the low energy surface are not taken, the adhesive will not remain evenly coated over the low energy surface. Rather, the adhesive will tend to "bead up" on the surface, causing unevenness and discontinuities of the adhesive on the surface.

A typical release liner construction consists of a paper, film or paper/film composite with a surface layer that typically contains silicone or fluorochemical moieties. The objective of this layer is to provide a surface that will allow an adhesive to be easily removed with minimal force. Many examples abound of this type of construction, such as pressure-sensitive adhesive ("PSA") backed labels or decals.

Since the function of a release liner is to provide a surface that will weakly bond to the adhesive, modifying this layer to increase its surface energy is generally not an option. Surface treatments will modify the bonding properties and thus negate the purpose of using a release surface in the first place. The result is that all of the modifications must come from the water-based adhesive.

Of the methods described earlier, viscosity modification is perhaps the easiest to implement with minimal deleterious effects to the final adhesive or coating properties. However, most common coating technologies have an optimum range of rheological characteristics for efficient coating performance. While these viscosity ranges vary from one coating technology to another, the optimum viscosity for coating is generally lower than what is needed to prevent the coating from dewetting on a release liner. Further, even if the coating technique can be adjusted to handle a higher viscosity, coating performance usually suffers. In addition, a high viscosity coating will generally have more defects due to entrained air and ribbing (high & low areas). Dried particles of the adhesive also become more prevalent due to poor circulation of the liquid adhesive in the coating equipment.

The above comments on viscosity also cover the art of modem rheology management where the viscosity can be adjusted to vary the viscosity versus shear rate. Much is known in the art, and many products are available to adjust the rheology of the water-based adhesive or coating. The most common additives allow for dramatically decreasing viscosity versus increasing shear rate. Despite these additives, the problems discussed above still remain. One key aspect is called the recovery time for the adhesive to build back to its low shear viscosity after being exposed to high shear such as when being pumped. A short recovery time is needed in order to have the high viscosity needed to prevent dewetting of the adhesive on the release liner. However, a longer recovery time is needed to permit the adhesive coating to level and for air bubbles to be released.

The method of adding surface active agents (surfactants) to the water-based adhesive is also known in the art. This method works by lowering the energy level (dyne level) of the adhesive to more closely match the low energy surface. While many materials are available to carry out this method, they suffer from a number of disadvantages. The first is that all surface-active agents cause foaming. While the degree of foaming varies from one product to another, foam generation is a problem due to the fact that it results in poor appearance and performance of the final product, and the foam also interferes with the efficient coating of the adhesive. In addition, addition of surfactants generally results in more moisture sensitivity of the adhesive. While this may not be a problem for PSA backed nametags, this is a problem for decals and related products that are used in an outdoor environment such as graphics on the side of a truck, where the lower adhesion due to moisture sensitivity is a major product defect. Another problem is that surface-active agents also preferentially migrate to the surface of the adhesive. This will change the bonding characteristics of the adhesive, particularly for PSAs. The most likely points of failure are between the backing and the adhesive, or the adhesive and the substrate. When combined with the moisture sensitivity problem described above, one can see that a catastrophic failure can result.

One can argue that to counteract the foaming problem, antifoam agents can be added. While judicious use of antifoaming agents can improve a coating situation, they also suffer from a number of problems. One is that many antifoam agents only work temporarily, and thus are best added just before coating. Giving control of these additives to a coater operator will result in the problem of too much being used. Since many of these antifoaming agents are surface active, care must be taken when adding them to a water-based formulation. Long-lasting antifoaming agents are available, but most of these are based on silicone technology. Silicones have severe detrimental performance on adhesives, and are generally not used in PSAs. Further, all antifoam agents are surface active, meaning they will effect adhesive bonding performance. Thus, the combination of surfactants and antifoaming agents has many negative effects, and both are generally used in the smallest possible amounts.

The method of using common solvents such as MEK is generally not used simply because most water-based adhesives will be destabilized by such solvents. Further, improving the bond between the adhesive and a release liner is not desirable.

The situation of coating a release liner is further complicated when the release liner surface is no longer flat, but has a three-dimensional shape, such as the liner used in the Comply^{™} products sold by Commercial Graphics. Such a release liner presents a number of unique problems: first is the fact that the three-dimensional surface results in an adhesive coating layer that has thick and thin spots. The thin spots are of particular concern because there is more likelihood of the adhesive starting to dewet at the thin spots. Thus, the coating must be engineered to prevent dewetting at the thinnest areas. A second fact is that the adhesive rheology must be adjusted to allow coverage of the entire topography. For example, in the Comply^{™} liner case, the liner surface consists of square pockets separated by a series of intersecting ridges, similar in geometry to graph paper, where the lines represent the ridges. These pockets must be completely filled with adhesive in order to have optimum adhesive performance. A very high viscosity adhesive would have problems in filling these depressed squares. A third fact is that certain areas of a three-dimensional topography are more likely to trap air bubbles during the coating operation. For the Comply^{™} liner example, this is most likely to happen at the intersections of the ridges. The trapped air bubbles present two difficulties. One is that they result in aesthetic and performance problems. Second is that an air bubble near a ridge is likely to cause a defect that results in dewetting on the low energy surface.

When confronted with a 3-dimensional liner topography, one can quickly see how the existing solutions to coating a low energy surface are found wanting. Increasing the viscosity results in incomplete fill of the topography, which in turn affects adhesive performance and the performance of the topography that was designed into the product. Further, more air will be trapped, creating more bubbles that will lead to defects. Thus, one can see that rheology alone is not the answer. Surfactants have all the problems described earlier, plus on a three-dimensional surface they will stabilize bubbles that are formed. This occurs not only in the coated layer of adhesive, but also causes a buildup of bubbles in the adhesive reservoir (coating pan) that most coating technologies use. Common organic solvents have all the problems listed earlier.

"Coating-enhancing" means that the adhesive exhibits improved coating uniformity without detracting from the adhesive bonding performance properties as compared to the same adhesive composition without the alcohol.

As used herein, "latex" means an emulsion of rubber or plastic globules in water. Preferred latex adhesives are styrene-butadiene rubber, acrylic, neoprene and vinyl acetate-ethylene. Additional preferred latices include butadiene and acrylonitrile copolymers, butadiene with styrene and acrylonitrile, chloroprene copolymers, methacrylate and acrylate ester copolymers, vinyl acetate copolymers, vinyl and vinylidene chloride copolymers, ethylene copolymers, fluorinated copolymers, acrylamide copolymers, styrene-acrolein copolymers, pyrrole and pyrrole copolymers, and poly(vinyl acetate)-poly(vinyl alcohol) copolymers.

The latex adhesive may also contain appropriate adjuvants such as plasticizers, tackifiers, viscosity modifiers, solvents (e.g. to coalesce the emulsion particles), fillers, humectants, biocides and anti-foaming agents.

As used herein, the term "low energy surfaces" is intended to mean those surfaces which exhibit low polarity and low critical surface tension (less than about 40 dynes/cm²) characteristics. Examples of low energy surfaces include polyolefin plastics, glass, and liners made of kraft papers, polyethylene, polypropylene, polyester or composites of any of these materials. These liners are coated with release agents such as fluorochemicals or silicone. U.S. Patent No. 4,472,480 describes low surface energy perfluorochemical liners. The preferred liners are papers, polyolefin films, or polyester films coated with silicone release materials. Examples of silicone coated release papers are Polyslik^{™} silicone release papers supplied by Rexam Release Corp., and silicone coated papers supplied by Daubert Chemical Co. (Dixon, IL). Particularly preferred low energy surfaces are structured liners, i.e. non-flat liners that impart roughness, grooves or other texture to the adhesive that is cast on the low energy surface. Most preferred arc the structured liners that impart channels or other geometries to the adhesive that allow escape of air upon placement of the adhesive on a smooth surface after removal of the protective low energy surface material. Particularly preferred structured liner configurations are disclosed in US Patent No. 5,897,930.

The adhesive composite of the present invention also contains a backing, which is the item to be adhered to the ultimate substrate by the latex adhesive. Suitable backings include, but are not limited to, polyesters, polyolefins, papers, cardboard, foils, polyacrylates, polyurethanes, perfluoropolymers, polycarbonates, ethylene vinyl acetates, and the like including multilayer films and combinations. Backings of vinyl films, woven and nonwoven sheets, woven and nonwoven fabrics, papers and retroreflective sheeting are particularly preferred.

The following non-limiting examples are provide for illustrative purposes only, and are not intended to limit the scope of the present invention. Unless otherwise indicated, all ratios and percentages are by weight, and all molecular weights are weight average molecular weights.

Peel Test: Adhesion tests were a modification of ASTM method D3330 (1992) and Pressure Sensitive Tape Council method PSTC-1 (1989). Painted aluminum test panels (Fruehauf, Indianapolis, IN) were cleaned with DuPont "PrcpSol" and allowed to dry. Samples of pressure sensitive adhesive and film on liner were cut into 2.54 centimeter wide strips. The release liner was removed, and the strips were applied to the panels using either a PA-1 Hand Applicator (available from Minnesota Mining and Manufacturing Company (3M) St. Paul, MN) at a speed of about 2.5 centimeter/second or a Vanquisher roll laminator (Stoughton Machine and Manufacturing Co., Inc., Stoughton Wisconsin) at 40 psi gauge pressure and a speed of about 2.5 cm/second. A backing strip of 2.54 centimeter wide 3M Scotchcal^{™} Film Series 3650 adhesive film was laminated in registration onto each sample strip. The backing film prevented the sample films and pressure sensitive adhesive from excessively stretching during peel back testing. After 7 days of soaking the applied samples in water at 22°C, the samples were removed from the water and the peel adhesion was measured as a 180 degree peel back at a crosshead speed of 30.5 centimeters per minute using a Lloyd 500 tensile tester (Lloyd Instruments, Segensworth Fareham England). The reported peel adhesion value is an average of three peel adhesion measurements.

Standard Defect Evaluation. To determine the ability of an adhesive to coat on a non-flat liner, a latex adhesive is coated on a 90 lb. polyethylene-coated paper liner from Assi-Domän/Inncoat GmbH, (Raubling, Germany) to which has been imparted a structured surface as described in Example 3 of US Patent No. 5,897,930 at a consistent wet coating thickness of about 75 micrometers. The dry coating thickness depends on the % solids of the adhesive. In general, most adhesives were coated at 40% solids, which in turn gives a dry coating weight of 0.38 +/- 0.02 grams per 154.8 cm² (a 4" x 6" sample). Preferably, the adhesive exhibits less than 50 defects per 154.8 cm² (a 4" x 6" sample). Preferably, the alcohol is present in an amount such that said adhesive exhibits fewer defects as compared to the same adhesive formulation that does not contain the coating enhancing alcohol.

### Examples

Example 1. 3M FASTBOND^{™} 49 adhesive was mixed with 0.1% of CE-2N black pigment (Ciba-Geigy, Hawthorne, NY) to provide a gray color in order to see defects. To this mixture, 2.5% by weight of n-octanol (Eastman Chemical Co., Kingsport, TN) was added while stirring on an air powered mixer with a 3-blade propeller style mixing blade. The mixing speed was set to give a slight vortex without causing air entrainment. The n-octanol was added slowly so as not to "shock" the adhesive and cause coagulation. The viscosity was measured with a Brookfield LVT viscometer with a #2 spindle at 30 RPM. The viscosity was recorded as 450 cps. The liquid was then coated on Comply^{™} liner SCW 1007 (3M Co., St. Paul, MN) using a knife bar coater with a coating gap of nominally 75 micrometers. The sample was dried for 10 minutes at 65°C. The dried coating weight was measured on analytical balance was found to be 0.50 grams per 154.8 cm². The liner coated was then laminated to a multilayer clear olefin film. A representative 4" by 6" sample was then cut out the construction, and the number of defects were counted. The number for this sample was zero defects.

Comparative Example 1. Same as example 1 except that no n-octanol was added to the formulation. The measured viscosity was 430 cps. The number of defects was 495.

Example 2. 72 grams of 3M FASTBOND^{™} 49 adhesive was mixed with 27 grams ofDI water, 0.15 grams of CE-2 black, 1 gram of 28% ammonia water, 0.5 gram of Acrysol ASE-60 (Rohm & Haas Co., Philadelphia, PA), and 2.5 grams of n-octanol. Procedures were the same as in Example 1. The viscosity was 200 cps. Coating in the same fashion as in Example 1, the dried coating weight was 0.37 grams per 154.8 cm². There were two defects. The objective of this example was to coat at the same wet coating thickness, but have a lower dried coating weight of adhesive.

Examples 3 to 5. Same as Example 2, but the amount of ASE-60 was increased to 1.0, 1.5 and 2.0 grams respectively. All samples had 0 defects. See Table 1.

Comparative Example 2 to 5. Same as Examples 2 to 5, except no n-octanol. See Table 1 for results.

**TABLE 1**

| **Example #** | **n-Octanol (%)** | **ASE-60 (gm)** | **Viscosity (cps)** | **Ctg. Wt. (gm)** | **Defects** |
|---|---|---|---|---|---|
| 2 | 2.5 | 0.5 | 200 | 0.37 | 2 |
| 3 | 2.5 | 1.0 | 295 | 0.37 | 0 |
| 4 | 2.5 | 1.5 | 490 | 0.37 | 0 |
| 5 | 2.5 | 2.0 | 780 | 0.37 | 0 |
| Comp Ex 2 | 0 | 0.5 | 165 | 0.37 | Approx. 3000 |
| Comp Ex 3 | 0 | 1.0 | 235 | 0.37 | Approx. 5000 |
| Comp Ex 4 | 0 | 1.5 | 400 | 0.37 | 435 |
| Comp Ex 5 | 0 | 2.0 | 660 | 0.36 | 196 |

As may be seen from table 1, n-octanol provides enhanced coatability over a range of viscosity levels to few or no defects. In contrast, the control samples with no n-octanol have large numbers of defects, even with increased viscosity. As will be shown in the next 4 examples, higher viscosity alone does not guarantee coating quality.

Examples 6 and 7. In these examples, a Changeable Graphics Adhesive, comprising a blend of FASTBOND^{™} 49 and microspheres, was modified with 2.5% n-otanol to improve coating of this adhesive on Comply^{™} liner in a production process. The only other change was to lower the amount of ASH-60 in the formula to give a viscosity of 720 cps. This adhesive was designated T15765. The liner was coated with the adhesive at a thickness of 0.42 grams per 154.8 cm², on a 49" (1.24 m) wide web. The drying was done in heated air ovens with temperatures ranging from 82°C to 88°C. The adhesive was bonded to a 50µ cast vinyl. The critical test was to see how fast we could run while having a zero defects. Two liners were tried: the first being SCW 1007 (Liner #1), the same used in Examples 1 to 5. A second liner (Liner #2) was tried because it is supplied from a different vendor, with a different silicone system. Both liners had the Comply^{™} and Controltac features. The results are shown in Table 2. One note is that for Example 6, 30 meters per minute ("mPm") was the highest speed reached before we ran out of material, there were no defects observed. On a subsequent experiment, 36.9 mPm was obtained with no defects.

Comparative Examples 6 and 7. For these examples, the Changeable Graphics Adhesive had no n-octanol, but high amounts of ASE-60 to give a viscosity of 4000 cps. The adhesive is designated T15764. Results are in Table 2. For Comp. Ex. 6, the maximum 12.2 meters per minute ("mPm") has been verified over several factory experiments.

**TABLE 2**

| **Example #** | **Adh 1.1).** | **Liner I.D.** | **n-Octanol** | **Viscosity (cps)** | **Max. Ctg. Speed (mPm)** |
|---|---|---|---|---|---|
| Example 6 | T15765 | Liner #1 | Yes 2.5% | 720 | 30.0 |
| Comp. Ex. 6 | T15764 | Liner #1 | No | 4000 | 12.2 |
| Example 7 | T15765 | Liner #2 | Yes 2.5% | 720 | 21.3 |
| Comp. Ex. 7 | T15764 | Liner #2 | No | 4000 | 9.14 |

As can be seen in Table 2, high viscosity alone does not guarantee good coating performance in a production situation. Also, the difference in silicone chemistry can have an effect on coating speed. However, the n-octanol still provides a significant benefit.

Comparative Example 8 and Examples 8 to 46. These examples are summarized in Table 3. These samples are the same as Comp. Ex. 4 and Example 4, except for the additive changes as indicated.

**TABLE 3**

| **Example** | **Additive Name** | **Level (wt%)** | **Viscosity (cps)** | **Ctg. Wt. (gm)** | **Defects** |
|---|---|---|---|---|---|
| Comp. Ex. 8 | None | 0 | 640 | 0.38 | 526 |
| Example 8 | n-Ethanol | 2.5 | 380 | 0.36 | 41 |
| Example 9 | n-Propanol | 2.5 | 420 | 0.37 | 0 |
| Example 10 | n-Butanol | 1.0 | 430 | 0.37 | 0 |
| Example 11 | n-Butanol | 2.5 | 450 | 0.36 | 0 |
| Example 12 | n-Hexanol | 1.0 | 470 | 0.38 | 0 |
| Example 13 | n-Hexanol | 2.5 | 540 | 0.38 | 0 |
| Example 14 | n-Octanol | 1.0 | 510 | 0.38 | 0 |
| Example 15 | n-Octanol | 2.5 | 590 | 0.38 | 0 |
| Example 16 | n-Decanol | 2.5 | 650 | 0.40 | 0 |
| Example 17 | n-Dodecanol | 2.5 | >1000 | 0.40 | >1000* |
| Example 18 | iso-Propanol | 2.5 | 380 | 0.38 | 178 |
| Example 19 | iso-Butanol | 1.0 | 440 | 0.37 | 15 |
| Example 20 | iso-Butanol | 2.5 | 330 | 0.38 | 1 |
| Example 21 | n-Hexyl Acetate | 2.5 | 970 | 0.36 | 75 |
| Example 22 | n-Octanoic Acid | 1.0 | 2500 | 0.38 | 0 |
| Example 23 | n-Octanoic Acid | 2.5 | >1000 | 0.38 | 0 |
| Example 24 | n-Heptane | 2.5 | >1000 | 0.38 | 1361 |
| Example 25 | n-Decane | 2.5 | >1000 | 0.36 | 313 |
| Example 26 | Toluene | 2.5 | >1000 | 0.40 | 175 |
| Example 27 | Methyl Ethyl Ketone | 1.0 | 450 | 0.37 | 351 |
| Example 28 | Methyl Ethyl Ketone (1) | 2.5 | 410 | 0.38 | 6 |
| Example 29 | Triethanol Amine | 2.5 | 480 | 0.37 | 408 |
| Example 30 | Ethylene Glycol | 2.5 | 440 | 0.35 | 387 |
| Example 31 | Dowanol EB (2) | 1.0 | 420 | 0.37 | 0 |
| Example 32 | Dowanol EB (2) | 2.5 | 390 | 0.35 | 0 |
| Example 33 | Dowanol TPM (2) | 2.5 | 360 | 0.34 | 0 |
| Example 34 | Dowanol DPM (2) | 2.5 | 380 | 0.35 | 3 |
| Example 35 | Dowanol PMA (2) | 2.5 | 370 | 0.36 | 2 |
| Example 36 | Surfynol 336PSA(3) | 1.0 | 550 | 0.39 | 0 |
| Example 37 | Surfynol 336PSA(3) | 2.5 | 840 | 0.39 | 0 |
| Example 38 | DowFax 2A1 (2, 4) | 2.5 | 260 | 0.38 | 0 |
| Example 39 | Triton X151 (5) | 2.5 | 280 | 0.38 | 44 |
| Example 40 | n-Hexyl Amine | 2.5 | Coagulated | NA | NA |
| Example 41 | Cyclopentanol | 2.5 | 570 | 0.36 | 57 |
| Example 42 | Cyclopentanol | 5.0 | 570 | 0.35 | 4 |
| Example 43 | Phenethyl Alcohol | 2.5 | 620 | 0.37 | 27 |
| Example 44 | Phenethyl Alcohol | 5.0 | 710 | 0.35 | 0 |
| Example 45 | Cyclohexyl - 1-Propanol | 2.5 | 700 | 0.38 | 128 |
| Example 46 | Cyclohexyl - 1-Propanol | 5.0 | 830 | 0.37 | 0 |

| | | | | | |
|---|---|---|---|---|---|
| Examples 17, 21 to 30, 35 to 38 and 40 to 44 are reference examples. Notes for Table 3 * - Many fine defects, but no large ones, appearance unacceptable 1 - Many fine coagulated particles in the adhesive. 2 - Dow Chemical Co.. Midland, M1 3 - Air Products Co., Allentown, PA, Surfactant 4 - Anionic surfactant 5 - Rohm & Haas Co., Philadelphia, PA, Non-Ionic Surfactant | | | | | |

The rest of the materials can be purchased from any number of Chemical Distributors, such as Aldrich Chemical Co., or J.T. Baker.

Comparative Example 9 and Examples 47-59. Same as Comp Ex 8 and Examples 8 to 46 except the experiment was done at a different time. The additives and results are located in Table 4. Methanol and 1,4-butanediol do not show any effect in reducing defects. Ethanol, 3-ethyl-1-hexanol and undecylenyl alcohol (C11 with one unsaturation group) show a significant effect compared to the control in reducing defects. N-Octanol also shows a significant effect even at 0.5 wt %.

**TABLE 4**

| **Example #** | | **Wt%** | **Defects** |
|---|---|---|---|
| C9 | None | | 922 |
| 47 | Ethanol | 5.0 | 71 |
| 48 | n-Octanol | 0.5 | 22 |
| 49 | n-Octanol | 5.0 | 0 |
| 50 | n-Octanol | 10.0 | 0 |
| 51 | n-Octanol | 15.0 | 0 |
| 52 | n-Octanol | 20.0 | 0 |
| 53 | Methanol | 2.5 | >2000 |
| 54 | Methanol | 5.0 | 1010 |
| 55 | 3-Methyl-1-Butanol | 2.5 | 0 |
| 56 | 3-Ethyl-1-Butanol | 2.5 | 0 |
| 57 | 3-Ethyl-1-Hexanol | 2.5 | 5 |
| 58 | Undccylenyl Alcohol | 2.5 | 24 |
| 59 | 1,4-Butanediol | 2.5 | 1200 |

| | | | |
|---|---|---|---|
| Examples 53, 54 and 59 are reference examples. | | | |

Comparative Example 10 and Examples 60-65. Same as Comp Ex 8 and Examples 8 to 46 except Union Carbide R 9168 (Union Carbide Corp., Cary, NC) was substituted for Fastbond^{™} 49, and no extra water or ASE-60 thickener was added. Results shown in Table 5. Both n-butanol and n-octanol showed good effect, particularly at the 5 wt% level.

**TABLE 5**

| **Example #** | **Union Carbide R9168** | **Wt%** | **Defects** | **Tack (6 m)** |
|---|---|---|---|---|
| C10 | None | 0.0 | >5000 | 155 |
| 60 | n-Butanol | 2.5 | 92 | |
| 61 | n-Butanol | 5.0 | 0 | 145 |
| 62 | n-Octanol | 2.5 | 9 | |
| 63 | n-Octanol | 5.0 | 0 | 135 |
| 64 | Dowanol EB | 2.5 | 0 | 160 |
| 65 | Dowanol EB | 5.0 | 0 | 175 |

Comparative Example 11 and Examples 66-67. Same as Comp Ex 10 and Examples 54 to 57 except, that Dynatech 1141 (Dyna-Tech Adhesives Inc., Grafton, WV), an SBR based adhesive, was used in place of R9168. The addition of n-butanol caused the latex to coagulate, but the addition of n-octanol did not cause any problems. As can be seen in the results in Table 6, the n-octanol had a positive effect.

**TABLE 6**

| **Example #** | **Dynatech 1141 (SBR Latex)** | **Wt%** | **Defects** |
|---|---|---|---|
| C 11 | None | 0.0 | >1500 |
| 66 | n-Butanol | 2.5 | Coag |
| 67 | n-Octanol | 2.5 | 0 |

Comparative Example 12 and Examples 68-69. Same as Comp Ex 10 and Examples 54 to 57 except, Airflex 420 (Air Products and Chemicals Inc., Allentown, PA) was used in place of R9168. Both n-butanol and n-octanol showed a positive effect. Results in Table 7.

**TABLE 7**

| **Example #** | **Airflex 420 (EVA)** | **Wt%** | **Defects** |
|---|---|---|---|
| C12 | None | 0.0 | 200 |
| 68 | n-Butanol | 2.5 | 1 |
| 69 | n-Octanol | 2.5 | 0 |

Comparative Example 13 and Examples 70-71. Same as Comp Ex 8 and Examples 8 to 46 except, that the adhesive was coated on a non-structured PolySlik™ (Rexam Release Corp., Iowa City, 1A) liner at a nominal 0.38 grams per 24 square inches. Results arc shown in Table 8. The test for good coating was to see how far the adhesive would shrink in from the edge of the liner on a 30.5 cm coated web. The edge shrinkage value is an average of both sides. As can be seen in Table 8, 5 wt% n-octanol reduced the edge shrinkage to 0.

**TABLE 8**

| **Example #** | **RD914** | **Wt%** | **Edge Shrinkage** | |
|---|---|---|---|---|
| C13 | none | | 2.22 | cm |
| 70 | n-Octanol | 2.5 | 1.59 | " |
| 71 | n-Octanol | 5.0 | 0.00 | " |

| | | | | |
|---|---|---|---|---|
| Examples 70 and 71 are reference examples. | | | | |

Comparative Example 14 and Examples 72-73. Same as Comp Ex 13 and Examples 63 to 64 except, that R9168 was used as in Comp Ex 10. Results in Table 9. The n-octanol did not completely eliminate the edge shrinkage, but reduced it significantly compared to the control. For Comp Ex 14, the result was that only the center 4 inches of the web had a continuous film of adhesive, with the outer 4 inches on either side being composed of individual droplets.

**TABLE 9**

| **Example #** | **R9168** | **Wt%** | **Edge Shrinkage** | |
|---|---|---|---|---|
| C14 | none | 0.0 | 10.16 | cm |
| 72 | n-Octanol | 2.5 | 2.54 | " |
| 73 | n-Oclanol | 5.0 | 0.95 | " |

| | | | | |
|---|---|---|---|---|
| Examples 72 and 73 are reference examples. | | | | |

Comparative Examples 15 and 16 and Examples 74-88. Same as Comp Ex 8 and Examples 8 to 46 except, that an adhesive, called Changeable Graphics Adhesive ("CGA"), composed of Fastbond 49 and 3M hollow microspheres, was prepared with a number of additives as shown in Table 10. The CGA was prepared at a low viscosity in order to more easily discriminate between the effects of the additives in a lab experiment. Also in Table 10 are the number of defects per 24 sq. inches. Viscosity and coating weight data were omitted since they both varied in an acceptable range. In the additional columns in Table 10, the various adhesive performance properties are shown. Liner release is a measure of how easy it is to remove the product from the liner. The key performance property is that the liner release remain the same. The next column shows Probe Tack (ASTM D2979-71), which measures the initial "grab" of the adhesive. This test generally has a great deal of variability.

The last two columns show the 180 degree peel. The adhesive coated samples were applied to either Fruehauf painted aluminum (a common truck body material) or aluminum panels that had 3M 180-10 vinyl graphic film applied to the surface, the latter simulating overlaps when applying graphics. After application, the samples were subjected to 7 days water-soaking to simulate a severe weather condition. As can be seen in Table 10, the only additive that shows a severe negative effect is Surfynol 336, which illustrates the problems with surfactants.

**TABLE 10**

| **Example #** | **Additive** | **Wt%** | **Defects** | **Liner Release** | **Tack** | **FRUE-HAUF** | **180-10** |
|---|---|---|---|---|---|---|---|
| | | | | **254 cm grams** | **Grams** | **7d/H2O Avg (lbs/in)** | **7d/H2O Avg (lbs/in)** |
| C 15 | None | 0.0 | >2000 | 15 | 130 | 1.4 | 3.0 |
| 74 | n-Ethanol | 1.0 | 130 | 15 | 120 | 1.3 | 2.4 |
| 75 | n-Propanol | 1.0. | 99 | 16 | 110 | 1.2 | 2.9 |
| 76 | n-Butanol | 1.0 | 118 | 15 | 125 | 1.2 | 2.5 |
| 77 | n-Octanol | 0.5 | 48 | 15 | 105 | 1.3 | 3.1 |
| 78 | n-Octanol | 1.0 | 0 | 16 | 130 | 1.5 | 3.0 |
| 79 | n-Octanol | 1.5 | 0 | 15 | 120 | 1.3 | 2.8 |
| 80 | n-Octanol | 2.5 | 0 | 16 | 125 | 1.3 | 2.7 |
| 81 | iso-Propanol | 1.0 | 6 | 15 | 110 | 1.4 | 3.0 |
| 82 | iso-Butanol | 1.0 | 16 | 15 | 110 | 1.3 | 2.2 |
| 83 | Dowanol EB | 1.0 | 0 | 16 | 100 | 1.4 | 2.4 |
| 84 | Dowanol EB | 2.5 | 0 | 1.5 | 120 | 1.2 | 2.2 |
| 85 | Dowanol DPM | 1.0 | 355 | 14 | 105 | 1.2 | 2.3 |
| 86 | Dowanol PMA | 1.0 | 200 | 15 | 120 | 1.4 | 2.6 |
| 87 | Cellosolve Acetate | 1.0 | 58 | 15 | 105 | 1.3 | 2.8 |
| 88 | Cellosolve Acetate* | 2.5 | 192 | 16 | 95 | 1.2 | 2.3 |
| C16 | Surfynol 336 | 1.0 | 0 | 18 | 110 | 0.1 | 0.7 |
| | * - Starting to see coagulation with the addition of the additive | | | | | | |

| | | | | | | | |
|---|---|---|---|---|---|---|---|
| Examples 86 to 88 are reference examples. | | | | | | | |

Comparative Example 17 and Examples 89-97. Same as Comp Ex 15 and 16 and Examples 74 to 88 except, that prepared in a separate experiment, with the adhesive aging being only 4 days instead of 7. As can be seen in Table 11, Dowanol materials provide good reduction of defects compared to the control.

**TABLE 11**

| **Example #** | **Additive** | **wt%** | **Defects** | **Tack** | **FRUE-HAUF** | **180-10** |
|---|---|---|---|---|---|---|
| | | | | **(grams)** | **4d/H2O Avg (lbs/in)** | **4d/H2O Avg (lbs/in)** |
| | | | | | | |
| C17 | None | 0 | >2000 | 130 | 1.0 | 2.9 |
| 89 | n-Octanol | 5.0 | 0 | 110 | 0.6 | 2.9 |
| 90 | Dowanol EB | 2.5 | 0 | 110 | 0.7 | 3.1 |
| 91 | Dowanol EB | 5.0 | 0 | 115 | 0.6 | 3.0 |
| 92 | Dowanol EB | 10.0 | 0 | 115 | 0.7 | 2.9 |
| 93 | Dowanol DB | 2.5 | 0 | 115 | 0.8 | 3. |
| 94 | Dowanol DM | 2.5 | 65 | 115 | 0.9 | 3.1 |
| 95 | Dowanol DPnB | 2.5 | 0 | 95 | 0.5 | 2.9 |
| 96 | Dowanol PPH | 2.5 | 3 | 120 | 0.8 | 3.2 |
| 97 | Dowanol TPnB | 2.5 | 0 | 100 | 0.6 | 2.8 |

| | | | | | | |
|---|---|---|---|---|---|---|
| Examples 96 and 97 are reference examples. | | | | | | |

Fig. 1 is a side-by-side photograph of two adhesives coated on non-flat liners. Adhesive/liner composite 10 corresponds to comparative Example 1. Defects 15 are apparent, which are locations on the structured liner where no adhesive is present. Adhesive/liner composite 20 corresponds to Example 1. No defects are visible in this composite 20.

## Claims

1. An adhesive composite, comprising
a) a sheet material having a low energy surface, which is a microstructured liner, the sheet material having a first major surface and a second major surface, the first major surface being microstructured,
b) a latex adhesive coated on the first major surface of the sheet material from a coatable adhesive composition, the coatable adhesive composition comprising:
(i) a latex adhesive, and
(ii) 0.5 to 20 % by weight of a C2-C11 linear or branched, optionally unsaturated, alkyl mono-alcohol, said alcohol optionally being interrupted with one or more oxygens and being a liquid at 25°C, and
c) a backing layer having a first major surface and a second major surface, the second major surface being in contact with said coated latex adhesive.

2. The adhesive composite of claim 1, wherein the alcohol is selected from C3-C10 linear or branched mono-alcohols.

3. The adhesive composite of claim 1, wherein the alcohol is n-octanol.

4. The adhesive composite of any of claims 1 to 3, wherein the latex adhesive comprises a polymer selected from the group consisting of styrene-butadiene rubber, acrylic, neoprene and vinyl acetate-ethylene.

5. The adhesive composite of any of claims 1 to 4, wherein the backing layer is selected from the group consisting of polyesters, polyolefins, papers, cardboard, foils, polyacrylates, polyurethanes, perfluoropolymers, polycarbonates, ethylene vinyl acetates, and combinations thereof.

6. The adhesive composite of any of claims 1 to 5, wherein the backing layer is selected from the group consisting of vinyl films, woven and nonwoven sheets, woven and nonwoven fabrics, papers and retroreflective sheeting.

## Patentansprüche

1. Klebstoffkomposit umfassend:
a) Flächenmaterial mit einer Oberfläche mit niedriger Energie, das ein mikrostrukturierter Liner ist, wobei das Flächenmaterial eine erste Hauptoberfläche und eine zweite Hauptoberfläche aufweist, wobei die erste Hauptoberfläche mikrostrukturiert ist,
b) einem Latexklebstoff, der auf die erste Hauptoberfläche des Flächenmaterials aus einer auftragbaren Klebstoffzusammensetzung aufgetragen ist, wobei die auftragbare Klebstoffzusammensetzung umfasst:
(i) einen Latexklebstoff und
(ii) 0,5 bis 20 Gew.-% eines linearen oder verzweigten, gegebenenfalls ungesättigten, C2-C11-Alkylmonoalkohols, wobei der Alkohol gegebenenfalls durch ein oder mehrere Sauerstoffe unterbrochen ist und bei 25°C eine Flüssigkeit ist, und
c) einer Rückschicht mit einer ersten Hauptoberfläche und einer zweiten Hauptoberfläche, wobei die zweite Hauptoberfläche mit dem aufgetragenen Latexklebstoff in Kontakt steht.

2. Klebstoffkomposit nach Anspruch 1, wobei der Alkohol aus linearen oder verzweigten C3-C10-Monoalkoholen ausgewählt ist.

3. Klebstoffkomposit nach Anspruch 1, wobei der Alkohol n-Octanol ist.

4. Klebstoffkomposit nach einem der Ansprüche 1 bis 3, wobei der Latexklebstoff ein Polymer umfaßt, das aus der Gruppe bestehend aus Styrol-Butadien-Kautschuk, Acryl, Neopren und Vinylacetat-Ethylen ausgewählt ist.

5. Klebstoffkomposit nach einem der Ansprüche 1 bis 4, wobei die Rückschicht aus der Gruppe bestehend aus Polyestern, Polyolefinen, Papieren, Pappe, Folien, Polyacrylaten, Polyurethanen, Perfluorpolymeren, Polycarbonaten, Ethylen-Vinylacetaten und Kombinationen davon ausgewählt ist.

6. Klebstoffkomposit nach einem der Ansprüche 1 bis 5, wobei die Rückschicht aus der Gruppe bestehend aus Vinylfolien, gewebe- und vliesartigen Flächengebilden, gewebe- und vliesartigen Textilstoffen, Papieren und retroreflektiven Folien ausgewählt ist.

## Revendications

1. Composite adhésif comprenant
a) un matériau en feuille à faible énergie de surface, qui est une doublure microstructurée, le matériau en feuille présentant une première surface majeure et une deuxième surface majeure, la première surface majeure étant microstructurée,
b) un adhésif de latex appliqué en revêtement sur la première surface majeure du matériau en feuille à partir d'une composition adhésive apte au revêtement, la composition adhésive apte au revêtement comprenant :
(i) un adhésif de latex, et
(ii) de 0,5 à 20 % en poids d'un mono-alcool alkylique en C2-C11 linéaire ou ramifié, éventuellement insaturé, ledit alcool étant éventuellement interrompu par un ou plusieurs atomes d'oxygène et étant un liquide à 25°C, et
c) une couche de support présentant une première surface majeure et une deuxième surface majeure, la deuxième surface majeure étant en contact avec ledit adhésif de latex appliqué en revêtement.

2. Composite adhésif selon la revendication 1, dans lequel l'alcool est choisi parmi des mono-alcools en C3-C10, linéaires ou ramifiés.

3. Composite adhésif selon la revendication 1, dans lequel l'alcool est le n-octanol.

4. Composite adhésif selon l'une quelconque des revendications 1 à 3, dans lequel l'adhésif de latex comprend un polymère choisi parmi le groupe constitué d'un caoutchouc de styrène-butadiène, d'un polymère acrylique, du néoprène et d'un acétate de vinyl/éthylène.

5. Composite adhésif selon l'une quelconque des revendications 1 à 4, dans lequel la couche de support est choisie parmi le groupe constitué de polyesters, de polyoléfines, de papiers, du carton, de feuilles, de polyacrylates, de polyuréthanes, de perfluoropolymères, de polycarbonates, d'éthylène/acétates de vinyle, et de leurs combinaisons.

6. Composite adhésif selon l'une quelconque des revendications 1 à 5, dans lequel la couche de support est choisie parmi le groupe constitué de films vinyliques, de feuilles tissées et non tissées, d'étoffes tissées et non tissées, de papiers et de plaques rétro-réfléchissantes.
